# EUROPEAN PATENT APPLICATION

(11) **EP 1 460 520 A1**
(43) Date of publication of application: **22.09.2004**
(21) Application number: 01275130.1
(22) Date of filing: 27.12.2001
(51) Int. Cl.: G06F 3/00, G06F 9/06, G06F 3/06

(54) **INFORMATION PROCESSOR AND STORAGE DEVICE**

(71) Applicant: FUJITSU LIMITED, Kawasaki-shi, Kanagawa 211-8588 (JP)
(72) Inventor: YAMASHITA, Susumu c/o Fujitsu Limited, Kawasaki-shi, Kanagawa 211-8588 (JP); KATAHARA, Naotoshi c/o Fujitsu Limited, Kawasaki-shi, Kanagawa 211-8588 (JP)
(74) Representative: Gibbs, Christopher Stephen
(86) International application number: PCT/JP2001/011583
(87) International publication number: WO 2003/060679

(57) **Abstract**

A hard disk drive (17) is attachable to and detachable from an enclosure (16) of a computer (15). The user is allowed to tote the hard disk drive (17) at hand. Various information related to the operating conditions is stored in the hard disk drive (17). If the user is allowed to operate the computer (15) solely based on the single hard disk drive (17), the accustomed operating conditions can always be established for plural computers (15). If the mentioned computer (15) is utilized to establish a desktop computer system, it is possible to avoid reduction in the size of the screen of the display device and the keyboard. A superior maneuverability can be obtained.

## Description

### Technical Field

The present invention relates to an information processing apparatus comprising a processor such as a central processing unit (CPU) and a storage device such as a hard disk drive (HDD).

### Background Art

In general, various information is read out of a hard disk drive (HDD) in a computer system during the processing. The operating conditions are determined based on the read information. Since the HDD is enclosed in an enclosure of a computer, the identical operating condition cannot be realized in different computers unless the information is transferred to a computer from another computer. The increased volume of information affecting the operating conditions makes it difficult to realize the common operating condition for different computers.

The reduced volume of a computer enables a user to tote a computer at hand. In this case, it is sufficient for a user to own a single computer. If a user is allowed to solely operate only own computer, the user can always enjoy the accustomed operating conditions. However, the reduced volume of a computer also makes the screen of an accompanied display and a keyboard smaller. The maneuverability gets worse.

The HDD usually holds programs for establishing the operating conditions, application programs, unique data of a user, and the like. The unique data of the user should be prevented from leakage. The unique data of the user is preferably protected from inspection of someone else. In general, a certificate data such as a password is utilized to protect the unique data from leakage and inspection. The input certificate data is compared with the registered certificate data prior to access to the data within the HDD. This check is troublesome to the user. In addition, the certificate data may possibly be looked through. Even when a certificate data has been registered, the unique data cannot reliably be protected in some cases.

### Disclosure of Invention

It is accordingly an object of the present invention to provide an information processing apparatus contributing to an improvement of operating conditions without deterioration of the maneuverability. It is also an object of the present invention to provide an information processing apparatus contributing security of data stored within a storage device.

According to a first aspect of the present invention, there is provided an information processing apparatus comprising: an enclosure enclosing at least a processor; and an opening defined in the enclosure, said opening designed to guide insertion and removal of a storage device.

The information processing apparatus allows the user to easily attach and detach the storage device such as a hard disk drive to and from the enclosure. The user may simply own a single storage device for plural enclosures. In general, various information related to the operating conditions is stored in the storage device such as a hard disk drive. If the user is allowed to operate the information processing apparatuses solely based on the single storage device, the accustomed operating conditions can always be established for plural information processing apparatuses. It should be noted that any storage device other than the hard disk drive may be utilized as the aforementioned storage device.

The above-described information processing apparatus may be utilized to establish a so-called desktop computer system. It is possible to avoid reduction in the size of the screen of the display device and the keyboard in the desktop computer system. A superior maneuverability can be obtained. In addition, the storage device such as a hard disk drive can be lighter and smaller than a general small computer such as a notebook personal computer system, so that the user is allowed to easily tote the storage device at hand.

According to a second aspect of the present invention, there is provided an information processing apparatus comprising: an enclosure enclosing at least a processor, wherein a storage device is attachable to and detachable from the enclosure, said storage device storing program instructions booting the processor.

In general, an operating system program is stored in a hard disk in a hard disk drive, for example. Unless the hard disk drive is installed in the information processing apparatus, the operating system cannot be booted. The information within the hard disk can be read out from the hard disk only if the operating system has been booted. The removal of the hard disk drive out of the enclosure of the information processing apparatus enables restriction of the booting of the operating system in a facilitated manner. A sufficient security can be established. In this case, the hard disk in the hard disk drive may be designated as the boot drive in the information processing apparatus.

In any event, the user is allowed to simply own a single storage device or hard disk drive for plural enclosures. Accordingly, if the user is allowed to operate the information processing apparatuses solely based on the single storage device in the aforementioned manner, the accustomed operating conditions can always be established for plural information processing apparatuses. The information processing apparatus of the type can be utilized to establish a desktop personal computer system in the same manner as described above.

According to a third aspect of the present invention, there is provided an information processing apparatus comprising: an enclosure enclosing at least a processor; an interface channel utilized to connect the processor with a primary storage device; an opening defined in the enclosure so as to receive insertion of a storage device; and a connector connected to the interface channel and connected to the storage device inserted through the opening.

In general, an operating system program is stored in a recording medium of a storage device, such as a hard disk in a hard disk drive. Unless the hard disk drive is connected to the interface channel, the operating system cannot be booted. Without the booting of the operating system, the information within the hard disk cannot be read out. Removal of the hard disk drive out of the enclosure of the information processing drive enables restriction of the booting of the operating system in a facilitated manner. A sufficient security can be established. In this case, the hard disk in the hard disk drive may be designated as the boot drive in the information processing apparatus.

In any event, the user is allowed to simply own a single storage device or hard disk drive for plural enclosures. Accordingly, if the user is allowed to operate the information processing apparatuses solely based on the single storage device in the aforementioned manner, the accustomed operating conditions can always be established for plural information processing apparatuses. The information processing apparatus of the type can be utilized to establish a desktop personal computer system in the same manner as described above.

In any of the aforementioned information processing apparatuses, a memory may be connected to the processor. The memory preferably stores a primary identification data designed to define a primary identifier and a booting program for boot of the information processing apparatus. The processor operates to compare a secondary identifier with the primary identifier based on the booting program. The secondary identifier may be included in a secondary identification data obtained from the storage device or hard disk drive. Based on the comparison, the processor determines the validity of the storage device inserted into the enclosure of the information processing apparatus. The information processing apparatus may prohibit the accessibility to the storage device unless the storage device is determined to be valid. A specific combination of the information processing apparatus and the storage device can be established in this manner. The credibility of the security can be improved.

The processor may determine based on the comparison between the primary and secondary identifiers whether or not the processor boots the operating system stored in the storage device or hard disk drive. In this case, the booting of the operating system can be prohibited unless the storage device or the hard disk drive is determined to be valid to the information processing apparatus. The credibility of the security can further be improved.

It is preferable to restrict the accessibility to the primary identification data and/or the secondary identification data in the information processing apparatus and/or the storage device. Only the booting program or BIOS program should be allowed to have the accessibility. The restricted accessibility leads to a higher creditability of the security. In particular, the overwriting is preferably prohibited on the primary identification data. This prohibition of the overwriting prevents the replacement of the primary identifier with a specific secondary identifier. A further restriction can be achieved to boot the operating system based on the readout from the storage device. Additionally, the primary and/or secondary identifiers may be stored in a memory or the hard disk drive after encryption.

A storage device or hard disk drive is provided for realizing the aforementioned information processing apparatus. The storage device or hard disk drive may comprise: a storage medium or hard disk storing an operating system program; an inner enclosure enclosing the storage medium; a printed circuit board at least partly exposed at the outer surface of the inner enclosure; and an outer enclosure covering over the printed circuit board at the outer surface of the inner enclosure.

### Brief Description of Drawings

Fig. 1 is a perspective view illustrating a specific example of a desktop computer system;
Fig. 2 is an exploded perspective view of a computer in the desktop computer system;
Fig. 3 is an exploded perspective view schematically illustrating the structure of a hard disk drive (HDD);
Fig. 4 is a plan view schematically illustrating the inner structure of the HDD;
Fig. 5 is a block diagram illustrating the structure of electronic components in the computer;
Fig. 6 is a block diagram illustrating the concept of recording areas on a hard disk in the HDD;
Fig. 7 is a flowchart schematically illustrating the processing of a central processing unit (CPU) in the computer in accordance with the description of a basic input/output system (BIOS) program;
Fig. 8 is a flowchart illustrating the processing of the CPU in the booting of an operating system (OS); and
Fig. 9 is a flowchart illustrating the processing of the CPU for establishment of a secondary identifier.

### Best Mode for Carrying Out the Invention

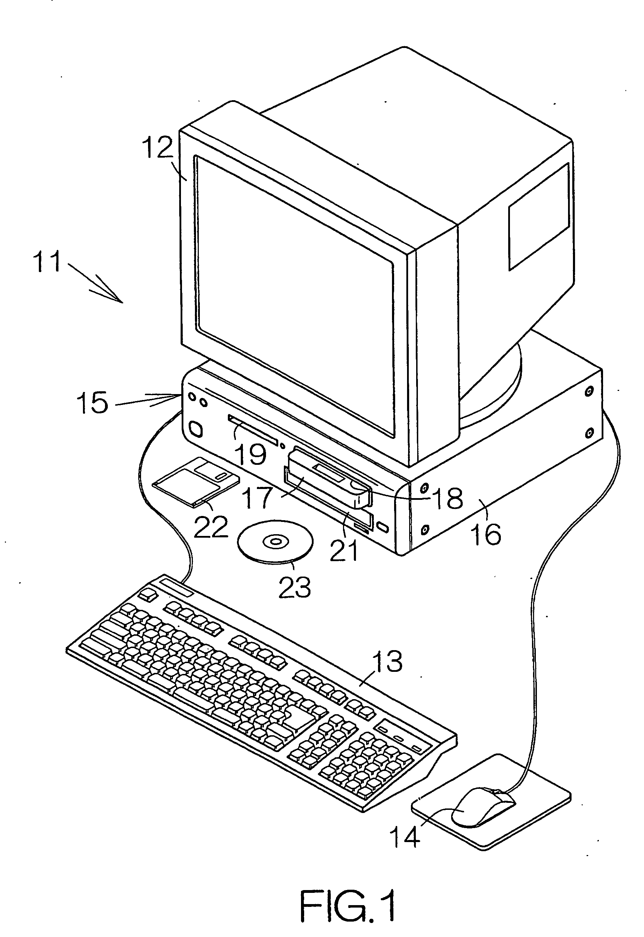

Fig. 1 illustrates a desktop computer system 11 as a specific example of an information processing apparatus. A display device 12 and input devices such as a keyboard 13 and a mouse 14 are connected to a computer 15 in the desktop computer system 11. The display device 12 is allowed to display images, including texts, on the screen based on image data supplied from the computer 15. The user can input various instructions and information data into the computer 15 through the input devices 13, 14.

The computer 15 includes an enclosure 16 enclosing at least a central processing unit (CPU). An opening 18 is defined in the front panel of the enclosure 16. The opening 18 is designed to receive insertion of a mass storage or hard disk drive (HDD) 17. As is apparent from Fig. 1, the HDD 17 can be inserted into the inner space of the enclosure 16 through the opening 18. The front end of the HDD 17 may remain out of the front panel of the enclosure 16 as illustrated. The display device 12 may be integral to the enclosure 16 of the computer 15, for example.

Recording medium drives such as a flexible disk drive (FDD) 19 and a CD-ROM (Compact Disk Read Only Memory) drive 21 are also enclosed within the enclosure 16 of the computer 15. The FDD 19 and the CD-ROM drive 21 are allowed to receive a diskette (FD) 22 and a CD-ROM medium 23, respectively, through receiving openings defined in the front panel of the enclosure 16. The FDD 19 and the CD-ROM drive 21 read data and/or software programs out of the diskette 22 and CD-ROM medium 23, respectively.

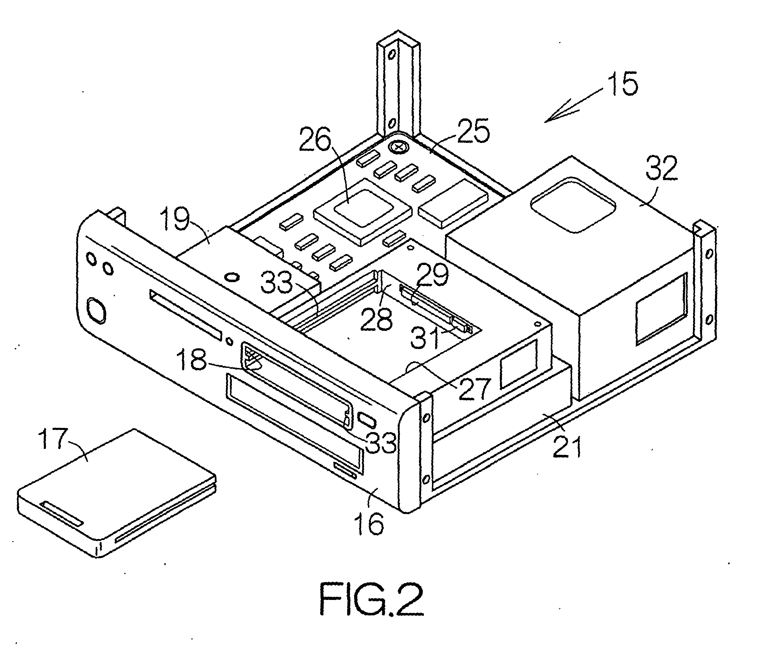

As shown in Fig. 2, a motherboard 25 is placed within the enclosure 16 of the computer 15. The aforementioned CPU 26 is mounted on the motherboard 25. The CPU 26 executes software programs such as a basic input/output system (BIOS), an operating system (OS), application softwares, and the like. The CPU 26 may stationarily be surface mounted on the motherboard 25 based on soldering or else. Alternatively, the CPU 26 may detachably be mounted on the motherboard 25 through a so-called CPU slot stationarily surface mounted on the motherboard 25.

A HDD mounting bay 27 is further placed within the enclosure 16. When the HDD 17 is received on the HDD mounting bay 27 in the enclosure 16, the rear end of the HDD 17 faces the bottom 28 of the HDD mounting bay 27. Connectors 29, 31 for IDE data and power supply are fixed to the bottom 28. A power supply unit 32 is connected to the connector 31 for power supply. Electric power from the power supply unit 32 is distributed to the motherboard 25, the connector 31 for power supply, the FDD 19, the CD-ROM drive 21, and other electronic devices. A pair of guide rails 33 are formed on the HDD mounting bay 27. The guide rails 33 extend along a horizontal plane from the opening 18 to the bottom 28.

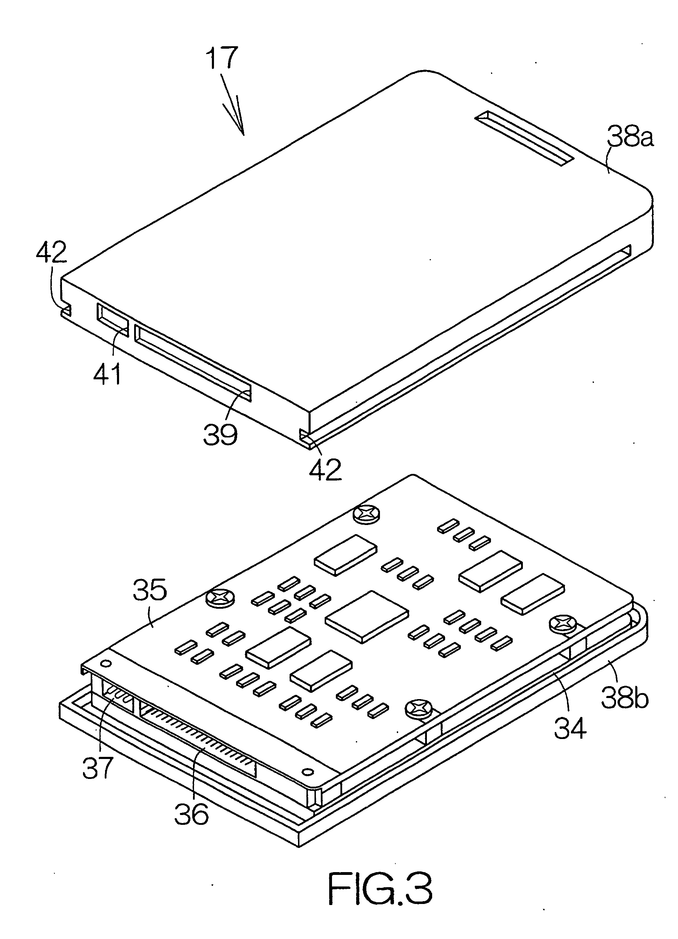

As shown in Fig. 3, the HDD 17 includes an inner enclosure 34 enclosing a mass storage medium, namely a hard disk (HD). A printed circuit board 35 get exposed at the outer surface of the inner enclosure 34. Connectors 36, 37 for IDE data and power supply, in addition to electronic circuits such as a hard disk controller and the like, are mounted on the printed circuit board 35. The hard disk controller is designed to manage the overall operation of the HDD 17.

The inner enclosure 34 is enclosed within an outer enclosure 38a, 38b. The outer enclosure includes a first half shell 38a and a second half shell 38b coupled with each other. The outer enclosure 38a covers over the printed circuit board 35 at the outer surface of the inner enclosure 34. Openings 39, 41 are defined in the outer enclosure 38a. The openings 39, 41 define passages to the connector 36, 37 for IDE data and power supply, respectively, on the printed circuit board 35.

Guide grooves 42 are formed on the outer enclosure 38a. The guide grooves 42 are designed to extend along parallel straight lines from the rear end of the HDD 17 to the front end of the HDD 17. When the HDD 17 is inserted into the enclosure 16 through the opening 18, the guide rails 33, 33 of the HDD mounting bay 27 are received in the corresponding guide grooves 42, 42, respectively. The guide rails 33, 33 serve to lead the insertion and removal of the HDD 17 in the HDD mounting bay 27 in this manner. When the rear end of the HDD 17 reaches the bottom of the HDD mounting bay 27, the connectors 36, 37 on the HDD 17 are coupled with the corresponding connectors 29, 31 on the HDD mounting bay 27, respectively. A transmission channel is thus established between the connectors 36, 29 for IDE data. A channel for electric current is thus established between the connectors 37, 31 for power supply. It should be noted that any other guide mechanism may be utilized in place of the combination of the guide grooves 42 and the guide rails 33.

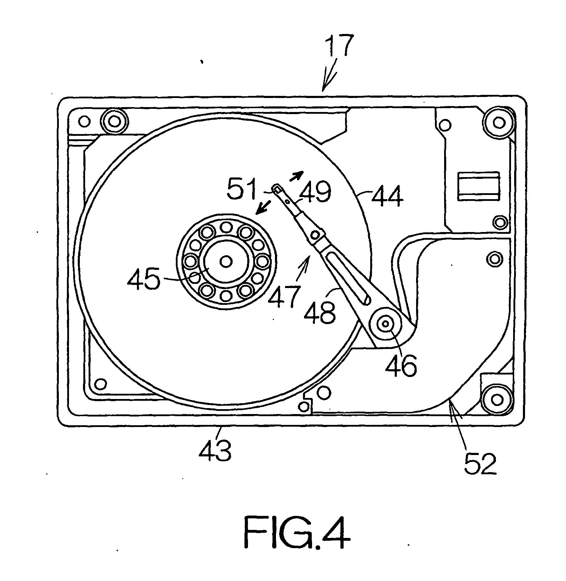

As shown in Fig. 4, the inner enclosure 34 of the HDD 17 includes a box-shaped enclosure body 43 defining an inner space in the form of a flat rectangular parallelepiped, for example. At least one hard disk 44 is placed within the inner space. The hard disk 44 is mounted on the drive shaft of a spindle motor 45. The spindle motor 45 is allowed to drive the hard disk 44 for rotation at a rotation speed such as 7,200rpm, 10,000rpm, or the like. A cover, not shown, is coupled to the enclosure body 43 for airtightly closing the inner space of the enclosure body 43.

A carriage 47 is also placed within the inner space. The carriage 47 is designed to swing around a vertical support shaft 46. The carriage 47 includes a rigid swinging arm 48 extending from the support shaft 46 in the horizontal direction. An elastic suspension 49 is attached to the front end of the swinging arm 38 so as to extend forward from the swinging arm 48. As conventionally known, a flying head slider 51 is cantilevered at the front end of the elastic suspension 49. A so-called gimbal spring, not shown, may be utilized to support the flying head slider 51 on the elastic suspension 49. The flying head slider 51 is allowed to receive an urging force from the elastic suspension 49 toward the surface of the hard disk 44. When the hard disk 44 rotates, airflow is generated along the surface of the rotating hard disk 44. The airflow serves to generate a lift on the flying head slider 51. The generated lift is balanced with the urging force from the elastic suspension 49. The flying head slider 51-is thus allowed to keep flying above the surface of the rotating hard disk 44 at a higher stability based on the aforementioned balance.

When the carriage 47 swings around the support shaft 46 during the flight of the flying head slider 51, the flying head slider 51 is allowed to move across the surface of the hard disk 44 along the radial direction of the hard disk 44. This radial movement realizes alignment of the flying head slider 51 above a target recording track on the hard disk 44. An actuator 52 such as a voice coil motor (VCM) may be employed to drive the carriage 47 for the swinging movement. As conventionally known, in the case where two or more hard disks 44 are placed within the enclosure body 43, a pair of the elastic suspensions 49 are related to a single swinging arm 48 between the adjacent hard disks 44.

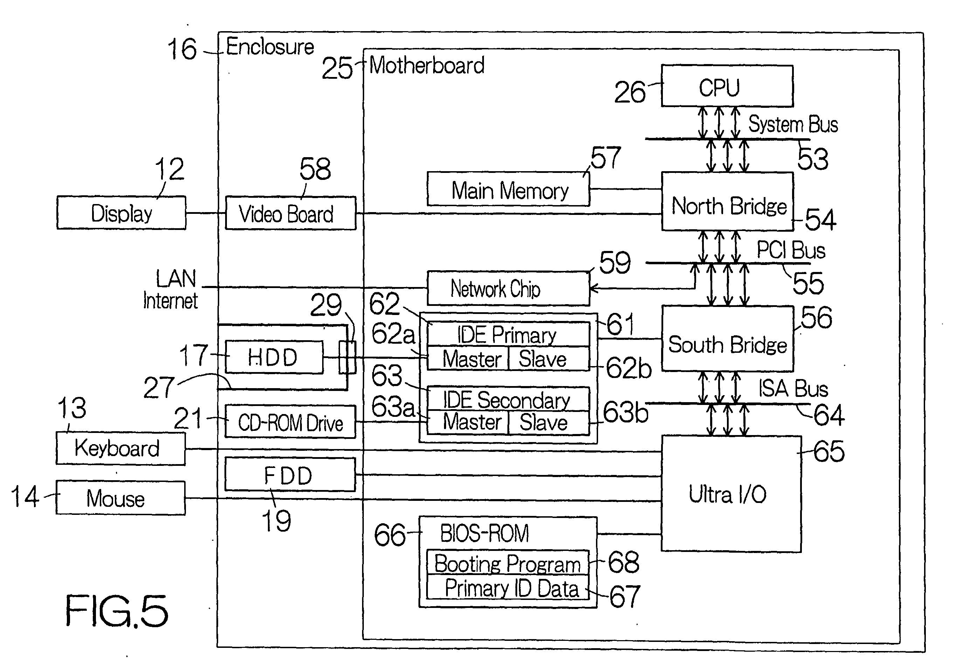

As shown in Fig. 5, a system controller or chip set is connected to the CPU 26 on the motherboard 25. The chip set includes a north bridge 54 and a south bridge 56. The north bridge 54 is connected to the CPU 26 through a system bus 53. The south bridge 56 is connected to the north bridge 54 through a PCI bus 55.

A main memory 57 is connected to the north bridge 54. The CPU 26 reads out the OS and application software programs, temporarily stored in the main memory 57, based on the function of the north bridge 54. A memory module such as a synchronous DRAM (SDRAM) , a Rambus DRAM (RDRAM), or the like, may be employed as the main memory 57. The memory module may removably be mounted on a DIMM connector stationarily mounted on the motherboard 25, for example.

A video board 58 is also connected to the north bridge 54, for example. The aforementioned display device 12 is connected to the video board 58. The video board 58 serves to supply the display device 12 with image signals based on the instructions from the CPU 26. The video board 58 may removably be mounted on a specific connector stationarily mounted on the motherboard 25, for example.

A network chip 59 is also connected to the north bridge 54 through the PCI bus. The network chip 59 serves to connect the CPU 26 in the computer 15 to a CPU, not shown, in other computer. The CPU 26 is allowed to exchange signals with other CPU through a LAN (local area network), the Internet, and the like. The network chip 59 may stationarily be mounted on the motherboard 25, for example.

An IDE interface circuit 61 is connected to the south bridge 56. The IDE interface circuit 61 includes a primary interface channel 62 and a secondary interface channel 63. Master channels 62a, 63a are established in the interface channels 62, 63, respectively. The master channels 62a 63a have priority on receiving connection of a primary mass storage. Slave channels 62b, 63b are also established in the interface channels 62, 63, respectively. The slave channels 62b, 63b are serially connected to the corresponding master channels 62a, 63a. The slave channels 62b, 63b are utilized to receive connection of a secondary mass storage. The aforementioned connector 29 is connected to the master channel 62a of the primary interface channel 62. The IDE interface circuit 61 serves to transfer data and/or software programs, stored in the hard disk 44 in the HDD 17, to the CPU 26 and/or the main memory 57, for example. The aforementioned CD-ROM drive 21 is connected to the master channel 63a of the secondary interface channel 63 through a specific connector, not shown. The IDE interface circuit 61 serves to transfer data and/or software programs, stored in the CD-ROM medium 23, to the CPU 26, the main memory 57 and/or the HDD 17, for example. The IDE interface circuit 61 may stationarily be mounted on the motherboard 25, for example. Alternatively, the IDE interface circuit 61 may be formed directly on a separate IDE board.

An ultra input/output (I/O) unit 65 is also connected to the south bridge 56 through an ISA bus 64. The aforementioned keyboard 13, mouse 14 and FDD 19 are connected to the ultra I/O unit 65 through a specific connector. The ultra I/O unit 65 serves to transfer data, input from the keyboard 13 and/or mouse 14, to the CPU 26 and the memory 57, for example. Data and/or software programs in the FD 22 can be transferred to the CPU 26, the main memory 57, and the HDD 17 with the assistance of the ultra I/O unit 65, for example.

A BIOS-ROM (read only memory) 66 is connected to the ultra I/O unit 65. The BIOS-ROM 66 contains a primary identification data 67 and a booting program 68. The primary identification data is designed to specify a primary identifier for authentication. The CPU 26 first executes the booting program when the computer system 11 is to be started. The primary identifier will be described later in detail. Here, a basic input/output system (BIOS) program should be included in the concept of the "booting program." A mask ROM, a flash ROM, or the like may be utilized as the BIOS-ROM 66, for example. The BIOS-ROM 66 may stationarily be mounted on the motherboard 25, for example.

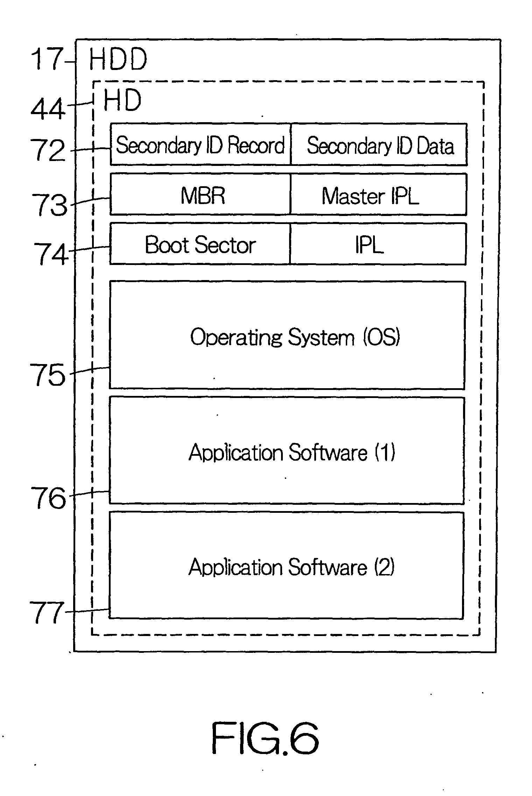

As shown in Fig. 6, a secondary identifier record 72 is defined on the hard disk 44 of the HDD 17. The secondary identifier record 72 includes a recording area for secondary identification data. The secondary identification data specifies the secondary identifier for authentication. The secondary identifier will be described later in detail. Numbered data recording areas are established within the secondary identifier record 72. The individual data recording areas are respectively filled in with a secondary identification data in the numbered sequence. A predetermined identifier is described in the data recording area subsequent to the data recording area or areas filled with the secondary identification data, in place of a secondary identification data, so as to indicate the last secondary identification data filled in the data recording area or areas.

A master boot record (MBR) 73 is defined in the hard disk 44 subsequent to the secondary identifier record 72. A master initial program loader (IPL) is stored in the MBR 73. A boot sector 74 is defined in the hard disk 44 subsequent to the MBR 73. The IPL is stored in the boot sector 74. Otherwise, the hard disk 44 further holds software programs such as the OS 75, application softwares 76, 77, and data utilized in the execution of the software programs.

Now, assume that the computer system 11 is to be booted. The display device 12 and peripheral devices are first turned on. When the computer 15 is thereafter turned on, a booting program or BIOS program is read out of the BIOS-ROM 66. The CPU 26 executes the processing in accordance with the description of the BIOS program.

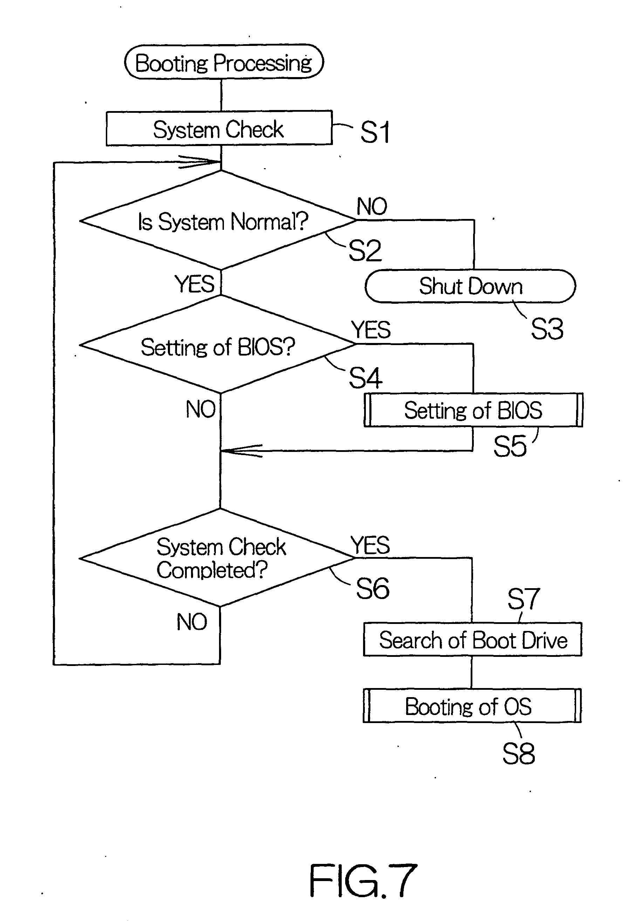

As shown in the flowchart of Fig. 7, the CPU 26 starts a system check at step S1. The main memory 57 is checked during the system check. Also, initialization of the peripheral devices such as the display device 12, the HDD 17, the FDD 19, the CD-ROM drive 21, and the like, is executed during the system check. The CPU 26 judges during the system check whether or not the computer 15 faces abnormal conditions at step S2. If the CPU 26 finds out failure in the main memory 57, or failure or disconnection of the peripheral devices 12, 17, 19, 21, for example, the CPU 26 forcibly discontinues the processing at step S3. The computer 15 is thus shut down.

As long as the CPU 26 keeps confirming the normal operation of the computer system 11 at step S2, the system check keeps going. The CPU 26 judges during the system check whether or not the setting processing of the BIOS should be established at step S4. The judgment may be conducted based on the manipulation of a key in the keyboard 13, for example. When the operator manipulates a predetermined function key in the keyboard 13, for example, the processing of the CPU 26 proceeds to step S5. The CPU 26 operates to provide the operator with a user interface for setting the BIOS. When the setting of the BIOS has been completed, the processing of the CPU 26 returns to the system check.

The CPU 26 judges whether or not the system check has been completed at step S6. If the system check has been completed, the processing of the CPU 26 proceeds to step S7. The CPU 26 searches for the boot drive. The CPU 26 operates to start the OS based on the boot drive at step S8. The HDD 17 is designated as the first boot drive in the BIOS in this case. The HDD 17 is connected to the master channel 62a of the primary interface channel 62 in the IDE interface circuit 61 as described above. The HDD 17 is the sole boot drive among the mass storages in the BIOS. Accordingly, unless the HDD 17 is set in the HDD mounting bay 27, the OS cannot be booted.

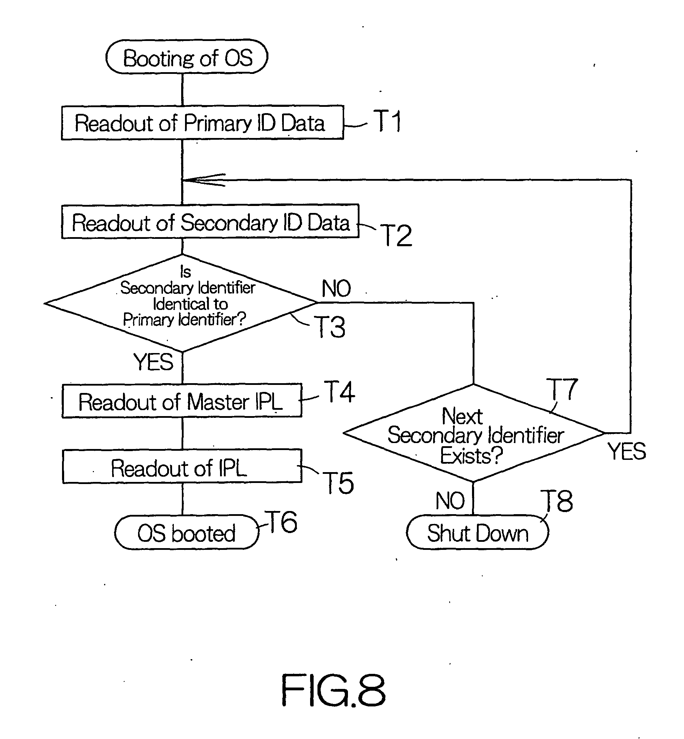

As shown in the flowchart of Fig. 8, the CPU 26 first reads out the primary identification data from the BIOS-ROM 66, at step T1, in the booting process of the OS. The CPU 26 accesses the boot drive, namely the HDD 17, at step T2. The CPU 26 then reads out a secondary identification data from the secondary identifier record 72 in the hard disk 44. The CPU 26 compares the primary identifier specified in the primary identification data and the secondary identifier specified in the secondary identification data at step T3. If a predetermined relevance is confirmed in accordance with a predetermined rule in the comparison, the CPU 26 authenticates the secondary identifier. For example, when the secondary identifier is identical to the primary identifier, the processing of the CPU 26 proceeds to step T4. A sequence of binary signals in the amount of approximately lbyte may be utilized as the primary and secondary identifiers for authentication, for example.

The CPU 26 then reads out the mater IPL from the MBR 73 in the hard disk 44. The master IPL takes over the processing of the CPU 26 from the BIOS program. The CPU 26 executes the processing in accordance with the description of the master IPL at step T5. The CPU 26 thus reads out the IPL from the boot sector 74 in the hard disk 44. The IPL takes over the processing of the CPU 26 from the master IPL. The CPU 26 thus executes the processing in accordance with the description of the IPL at step T6. The CPU 26 reads out the unique first file of the OS. The CPU 26 thereafter reads out the subsequent program files of the OS. The OS has booted up at step T6.

If the secondary identifier discords with the primary identifier at step T3, the processing of the CPU 26 proceeds to step T7. The CPU 26 accesses again the secondary identifier record 72 in the hard disk 44. The CPU 26 judges whether or not there is another secondary identifier. Specifically, the CPU 26 checks whether or not the data recording area of the secondary identifier record 72, which the CPU 26 is accessing, holds the identifier indicating the last secondary identification data. If the CPU 26 detects another secondary identifier at step T7, the processing of the CPU 26 returns to step T2. The CPU 26 reads out the secondary identification data from the secondary identifier record 72 on the hard disk 44. Unless the CPU 26 confirms that the secondary identifier conforms to the primary identifier at step T3, the processing of steps T2, T3 and T7 is repeated.

On the other hand, when the identifier indicating the last secondary identifier is found at step T7, the CPU 26 confirms that no other second identifier exists in the secondary identifier record 72. The CPU 26 operates to forcibly shut down the computer 15. The computer 15 is thus turned off. In this manner, unless the secondary identifier specific to the primary identifier unique to the computer 15 is found in the secondary identifier record 72 on the hard disk 44 in the computer 15, the OS cannot be allowed to boot up. A specific combination of the computer 15 and the HDD 17 should be established to boot the OS. The accessibility can in this manner be limited for the hard disk 44. The credibility of the security can be improved in the HDD 17.

Here, a brief description will be made on preparation of a secondary HDD 17 managing the booting of the OS in the aforementioned computer system 11. The aforementioned secondary identifier record 72 should be defined on the hard disk 44 in the secondary HDD 17. Also, a predetermined OS should be stored in the hard disk 44 in the secondary HDD 17. The secondary identification data specifying the secondary identifier equal to the primary identifier in the BIOS-ROM 66 is written into the hard disk 44 of the secondary HDD 17 in the following manner. The BIOS program is utilized to realize the writing of the identifier. As is apparent from the flowchart of Fig. 7, the processing of the CPU 26 proceeds to step S5 after the start of the system check at step S1 when the computer 15 has been turned on.

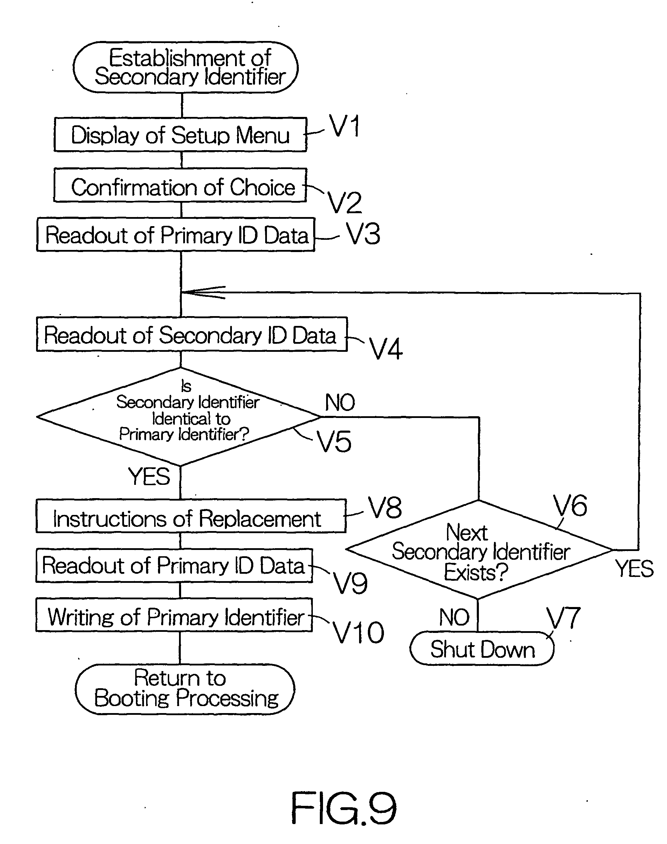

As shown in the flowchart of Fig. 9, the CPU 26 allows the display device 12 to display a BIOS setup menu on the screen at step V1. A predetermined option is included in the menu so as to suggest the operator establishment of the secondary identifier, for example. When the CPU 26 confirms the choice of the predetermined option at step V2, the CPU 26 reads out the primary and secondary identification data at steps V3, V4 in the aforementioned manner. The CPU 26 then compares the primary and secondary identifier with each other at step V5 in the aforementioned manner.

If the secondary identifier discords with the primary identifier at step V5, the processing of the CPU 26 proceeds to step V6. The CPU 26 judges whether or not there is another secondary identifier. If the CPU 26 finds another secondary identifier, the processing of the CPU 26 returns to step V4. The CPU 26 then reads out the secondary identification data from the secondary identifier record 72 on the hard disk 44. Unless the CPU 26 confirms that the secondary identifier conforms to the primary identifier at step V5, the CPU 26 keeps reading out another secondary identification data.

If all the secondary identifier is not valid at step V6, the CPU 26 operates to forcibly shut down the computer 15 at step V7. The computer 15 is thus turned off. In this manner, unless the secondary identifier specific to the primary identifier unique to the computer 15 is found in the secondary identifier record 72 on the hard disk 44 in the computer 15, the writing of the secondary identifier cannot be achieved for the secondary HDD 17. A specific combination of the computer 15 and the HDD 17 should be established to prepare the HDD 17 capable of managing the booting of the OS. The accessibility can in this manner be limited for the hard disk 44 in the secondary HDD 17.

If the secondary identifier conforms to the primary identifier at step V5, the CPU 26 instructs the operator to replace the HDD 17 with the secondary HDD at step V8. The instructions may be displayed on the screen of the display device 12, for example. After the operator has pulled out the primary HDD 17 out of the opening 18, the operator inserts another HDD, namely the secondary HDD 17, into the HDD mounting bay 27 through the opening 18.

When the secondary HDD has been inserted into the HDD mounting bay 27, the CPU 26 reads out the primary identification data from the BIOS-ROM 66 at step V9. The CPU 26 operates to write the primary identifier, specified in the primary identification data, into the secondary identifier record 72 on the hard disk 44 in the secondary HDD. The secondary identification data can in this manner established in the secondary identifier record 72 in the hard disk 44 in the secondary HDD. The new secondary identification data may be written over the identifier indicating the last secondary identification data. In this case, the data recording area subsequent to the overwritten data recording area may be subjected to the writing of the identifier indicating the last secondary identification. As is apparent from the flowchart of Fig. 7, the processing of the CPU 26 thereafter returns to the system check.

The HDD 17 can easily be removed from the enclosure of the computer 15 in the aforementioned computer system 11. Since the HDD 17 is smaller than the computer 15, the user is allowed to easily tote the HDD 17 at hand. As long as the aforementioned computer 15 is established based on the combination with the HDD 17, the user can enjoy the accustomed identical or common operating condition on the different computers 15. Moreover, the establishment of the aforementioned computer system 11 serves to avoid reduction in the size of the display device 12 and the keyboard 13. The superior maneuverability can be obtained.

The aforementioned computer 15 and HDD 17 may restrict the accessibility to the primary identification data in the BIOS-ROM 66 and the secondary identification data in the secondary identifier record 72, respectively. Only the BIOS program shouldbe allowed to have the accessibility to the primary and secondary identification data. The restricted accessibility leads to a higher credibility of the security. In particular, the overwriting is prohibited on the primary identification data, so that the primary identifier for authentication in the BIOS-ROM 66 cannot be replaced with other secondary identifier in the HDD 17. A further restriction can be achieved to boot the OS based on the readout from the HDD 17. Additionally, the primary and/or secondary identifiers may be stored in the BIOS-ROM 66 and hard disk 44 after encryption.

In addition to the aforementioned computer 15, a television, a refrigerator, a video reproduction and/or recordation system, a washing machine, and other types of electric apparatuses, may be included in the information processing apparatus.

## Claims

1. An information processing apparatus comprising:
an enclosure enclosing at least a processor;
an interface channel utilized to connect the processor with a primary storage device;
an opening defined in the enclosure so as to receive insertion of a storage device; and
a connector connected to the interface channel, said connector connected to the storage device inserted through the opening.

2. The information processing apparatus according to claim 1, wherein an operating system is stored in a storage medium of the storage device.

3. The information processing apparatus according to claim 2, wherein said storage medium of the storage device is designated as a boot drive.

4. The information processing apparatus according to any of claims 1 to 3, wherein a memory is connected to the processor, said memory storing a primary identification data designed to define a primary identifier and a booting program for boot of the information processing apparatus, the processor comparing a secondary identifier with the primary identifier based on the booting program, said secondary identifier being included in a secondary identification data obtained from the storage device.

5. The information processing apparatus according to claim 4, wherein overwriting of the primary identification data is prohibited in the memory.

6. The information processing apparatus according to claim 5, wherein access to the primary identification data is prohibited in the memory.

7. The information processing apparatus according to claim 5 or 6, wherein access to the secondary identification data is prohibited in the storage device.

8. A storage device comprising:
a storage medium storing an operating system program;
an inner enclosure enclosing the storage medium;
a printed circuit board at least partly exposed at an outer surface of the inner enclosure; and
an outer enclosure covering over the printed circuit board at the outer surface of the inner enclosure.

9. The storage device according to claim 8, wherein a recording area is defined in the storage medium so as to hold an identifier for authentication.

10. The storage device according to claim 8 or 9, wherein at least a guide is located on an outer surface of the outer enclosure.

11. A booting program for booting an information processing apparatus including a processor placed within an enclosure, comprising:
computer program code causing the processor to read a primary identification data out of a memory connected to the processor, said primary identification data including a primary identifier for authentication;
computer program code causing the processor to read a secondary identification data out of a storage device connected to the processor, said secondary identification data including a secondary identifier for authentication; and
computer program code causing the processor to compare the secondary identifier with the primary identifier based on the primary and secondary identification data.

12. The booting program according to claim 11, further comprising computer program code causing the processor to determine whether or not an operating system is to be booted on the basis of the comparison between the primary and secondary identifiers, said operating system being stored in the storage device.

13. An information processing apparatus comprising:
an enclosure enclosing at least a processor; and
an opening defined in the enclosure, said opening designed to guide insertion and removal of a hard disk drive.

14. An information processing apparatus comprising:
an enclosure enclosing at least a processor, wherein
a storage device is attachable to and detachable from the enclosure, said storage device storing program instructions booting the processor.
